Europäisches Patentamt

European Patent Office

Office européen des brevets

(19)

(11) Publication number: **0 125 671**
**B1**

(12) **EUROPEAN PATENT SPECIFICATION**

(45) Date of publication of patent specification: **21.09.88**

(51) Int. Cl.⁴: **H 01 M 2/02,** H 01 M 2/10

(21) Application number: **84105416.6**

(22) Date of filing: **12.05.84**

(54) **Improvements on containers for storage batteries.**

(30) Priority: **17.05.83 IT 8556483**

(43) Date of publication of application:
**21.11.84 Bulletin 84/47**

(45) Publication of the grant of the patent:
**21.09.88 Bulletin 88/38**

(84) Designated Contracting States:
**AT BE CH DE FR GB LI NL SE**

(56) References cited:
**DE-A-2 522 094**
**FR-A-1 448 994**
**FR-A-1 491 546**
**GB-A- 102 056**
**GB-A- 481 891**
**GB-A-2 076 584**
**US-A-2 385 127**
**US-A-3 338 452**

**DESIGN ENGINEERING, May 1978, page 11;**
**"Lead-calcium grid eliminates battery**
**maintenance"**

(73) Proprietor: **Stocchiero, Olimpio**
**4 Via Kennedy**
**I-36050 Montorso Vicentino (IT)**

(72) Inventor: **Stocchiero, Olimpio**
**4 Via Kennedy**
**I-36050 Montorso Vicentino (IT)**

(74) Representative: **Bonini, Ercole**
**Corso Fogazzaro, 8**
**I-36100 Vicenza (IT)**

Courier Press, Leamington Spa, England.

## Description

The present invention realizes a series of improvements in the construction of containers for storage batteries, obtained through the blowing plastic material.

Said improvements, although they concern formal aspects of the realization, obtain improvements in the functioning of the storage battery in relation to the efficiency of the same and to its life span.

The known containers are mostly made of thermically cast plastic material of the polypropilene type and have thicknesses varying between 2.5 and 4 mm.

Some containers obtained through the blowing procedure are also known; with such procedure it is possible to obtain thicknesses reduced by 60% as compared to preceding method; such reduction presents several advantages both as far as the saving in material is concerned and because, given the same outside overall dimension, with reduced thicknesses it is possible to dispose of a larger volume of electrolyte in the storage battery with remarkable advantages in relation to the life span and the functioning. On the other hand, the containers obtained through the blowing procedure, particularly when the same are of considerable height, for instance 600—700 mm., are bound to inflate in the middle. area because the material having a reduced thickness has no stiffness sufficient to prevent such deformations.

Even the terminal edge of the container has a tendency to present curved lines, so that it becomes necesssary to keep the edge of the container in shape, for instance by means of suction cups, during the soldering with lid of the storage battery.

Finally, during the functioning of the storage battery heat develops, due to the electrochemical reactions taking place inside the storage battery.

This is another factor which limits its efficiency, so that it is advisable to provoke a certain cooling effect, as far as possible.

The improvements proposed with the present invention solve the above-mentioned problems, in that the containers in question are equipped with a series of impressions in bas-relief which provoke the stiffness and the strengthening of the product, and other non-negligible effects and improvements in the functioning of the storage batteries; besides all four corners created by the vertical walls are rounded and arranged in register with the purpose of creating a columnar space when a plurality of containers are arranged and in which the air circulates and removes the heat generated during the functioning of battery. Finally, a sufficient space has been foreseen for the positioning of one or more couples of suction cups for holding in shape the container during the soldering of the lid.

These and other purposes are achieved by a container for storage batteries presenting a series of preferably horizontal bas-relief impressions arranged in a pattern of hours and columns.

This pattern defines inside vertical channels between adjacent columns having the purpose of allowing the circulation of the electrolyte present in the cavity between the wall and the element of the storage battery being closer to it. In fact, while the most external elements are blocked by the series of impressions and are, therefore, in direct contact with them, in the inner surface of the area between adjacent columns, the electrolyte can circulate freely with a convective motion, so as to avoid the stratification of the electrolyte at a density increasing from top to bottom. Besides, as it has been said, the corners of the vertical walls are rounded and in register when a plurality, of containers is arranged, in order to obtain an air channel, which removes the heat developing when the storage battery is working.

These and other characteristics and advantages of the invention will be better illustrated in the description of two preferred forms of execution of the containers based on the same principle of solution, here given as examples but non limiting nature and represented in the enclosed drawing, where:

Figure 1 represents a container with a series of columns of bas-relief impressions defining three vertical columns on the major vertical walls of the container and one vertical column on the minor vertical walls;

Figure 2 represents a variation of the container represented in Figure 1, where two columns of impressions define on each wall a single vertical band;

Figure 3 shows a series of containers arranged inside a containing case and emphasizing the air channels which are created in the area of the registered edges of the containers themselves.

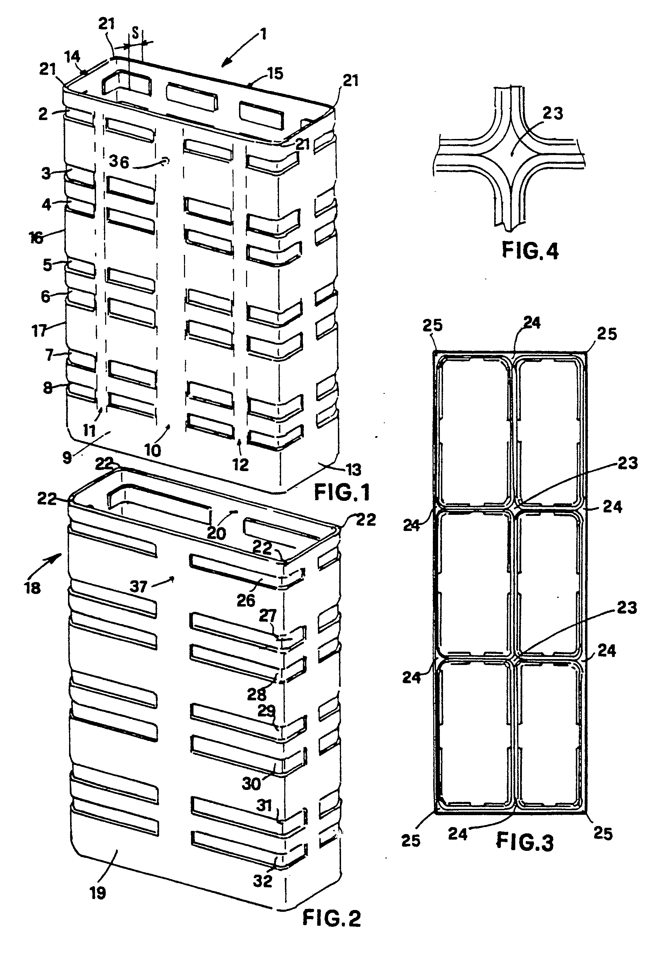

Figure 4 is an enlarged detail of said channels. With reference to Figure 1, each horizontal row of bas-relief impressions made on the same surface of container 1 has been marked with numbers from 2 to 8. On vertical wall 9 of the container there are three vertical columns partially defined by the impressions, each being emphasized by two broken lines and consisting of a larger central column 10, and two narrower columns 11 and 12. In these areas, since there is no direct contact between the container wall and the storage battery element, the electrolyte is free to circulate in all directions and also from top to bottom, so as to avoid stratifications by increasing densities towards the bottom of the container.

Wall 15, opposite the frontal one, is shaped in the same way, that is, with four columns of impressions which create the above-mentioned three vertical channels. On the other hand, the two side walls 13 and 14 have a single channel also meant for the free circulation of the electrolyte.

In the areas 16 and 17, located between two series of horizontal impressions it is possible to cut the container according to standard heights according to the specific needs. Naturally, container 1 will then be soldered to the lid by melting down from the top along the entire perimeter.

The fact is underlined that measurement 'S' of Figure 1 representing the sum of the actual thickness of the product and of the depth of the impression made in it is lower than, or at most, equal to the medium thickness obtained in containers built with the casting system.

It follows that such shape the container, even in the presence of the above-mentioned depressed impressions, has a higher capacity for the storage of the electrolyte, when compared to containers having the same dimensions obtained through casting.

In Figure 2 a manufacturing variation of the container for storage batteries is represented. This container 18, compared to the one in Figure 1 presents on the larger vertical walls 19 and 20 a single vertical column, instead of three, defined by the impressions. In this case too the purpose of allowing the electrolyte in contact with said walls to circulate within the containers preventing the stratification of the liquid by increasing density from top to bottom is reached.

The rounded edges of the vertical walls, marked with 21 in Figure 1 and with 22 in Figure 2 are registered, as can clearly be seen in Figures 3 and 4.

In this way columnar spaces are formed, as in 23, 24 and 25, within which air can circulate and remove a certain amount of the heat produced during the functioning of the storage batteries.

To clarify: the surface of the container removing the heat generated by the functioning of the storage batteries consists of the bas-relief impressions straddling the edges of the container; in Figure 2, all the impressions numbered from 26 to 32 convey the heat onto the same vertical air channel 23.

Finally, the fact is emphasized that the areas with a flat surface marked with no. 36 in Figure 1 belonging to channel 10 and with no. 37 in Figure 2 and the corresponding areas on the opposite wall of the container can easily be used as area for the application of suction cups to hold the terminal part of the container in shape during the soldering of the lid.

In any case, the described horizontal bas-relief impressions can also acquire a position inclined in relation to the horizontal surface, always maintaining the same functional characteristics both as far as the obtained stiffness and the conveying of heat in the air channels are concerned.

## Claims

1. A blow moulded, parallelepiped, storage battery container made of thermoplastic material, characterised in that its vertical walls are provided with horizontal or slanted, bas-relief impressions arranged in a pattern of rows and columns, whereby the wall portions between two adjacent columns define with said adjacent columns a vertical space for electrolyte circulation.

2. A container according to Claim 1, characterised in that the vertical walls have rounded corner edges straddled by a column of bas-relief impressions.

3. An assembly of a plurality of containers according to claim 2 arranged with the rounded corner edges in register so as to form a columnar space in which the air, conveyed there to by the bas-relief impressions straddling the rounded corner edges, circulates and removes the heat generated during the functioning of the battery.

4. A container according to claims 1 and 2, characterised in that sufficient space is left between the columns of bas-relief impressions of the walls of greater width to leave a flat area near the upper edge of the container which allows the application of suction cups or of similar implements holding in shape the edge during the soldering of a lid.

## Patentansprüche

1. Parallelepipedförmiger, blasgeformter Behälter für Akkumulatorenbatterie, aus Kunststoff, dadurch gekennzeichnet, daß seine senkrechten Wände waggerechte oder schräge Basrelief-Eindrücke aufweisen, die reihenweise oder säulenweise angeordnet sind, damit die Teile der Wand, die sich zwischen zwei anliegenden Säulen befinden, mit den genannten Säulen einen senkrechten Raum zum Umlauf des Elektrolyts bestimmen.

2. Behälter nach Anspruch 1, dadurch gekennzeichnet, daß die senkrechten Wände abgerundete Ecken aufweisen, die von einer Säule von Bes-Relief-Eindrücken überlappt sind.

3. Satz von mehreren Behältern nach Anspruch 2, wobei ihre abgerundeten Ecken genau eingestellt sind, damit ein säulenförmiger Raum davon entsteht, wodurch die durch die die abgerundeten Ecken überlappenden Basrelief-Eindrücke eingeführte Luft umläuft und die während des Betriebs der Batterie erzeugte Wärme entfernt.

4. Behälter nach den Ansprüchen 1 und 2, dadurch gekennzeichnet, daß ein ausreichender Raum zwischen den Säulen von Basrelief-Eindrücken auf den breiteren Wänden gelassen wird, um eine flache Oberfläche in der Nahe des oberen Behälter-Randes zu erhalten, damit die Anwendung von Saugköpfen oder ähnlichem Zubehör zum Gestalthalten des Randes während der Schweissung eines Deckels ermöglicht wird.

## Revendications

1. Conteneur pour batterie d'accumulateurs à forme de parallélépipède, obtenu par moulage par soufflage, en matériel plastique, caractérisé en ce que ses parois verticales sont pourvues d'impressions en bas-relief horizontales ou obliques, arrangées en rangs ou en colonnes, ansi que les portions de paroi entre deux colonnes adjacentes definissent avec les dites colonnes un espace vertical pour la circulation de l'électrolyte.

2. Conteneur selon la revendication 1, caractérisé en ce que les parois verticales ont les angles à bords arrondis, surmontés par une colonne d'impressions en bas-relief.

3. Assemblage d'une pluralité de conteneurs selon la revendication 2, arrangés en registre avec leurs angles à bords arrondis, de façon à former un espace en colonne dans lequel l'air qu'y est amené à travers les impressions en bas-relief surmontant les angles à bords arrondis, circule et ôte la chaleur produite pendant le fonctionnement de la batterie.

4. Conteneur selon les revendications 1 et 2, caractérisé en ce qu'un espace suffisant est laissé entre les colonnes d'impressions en bas-relief sur les parois ayant la largeur plus grande pour laisser une surface plate près du bord supérieur du conteneur, ce qui permet l'application de ventouses ou d'outils similaires maintenant en forme le bord pendant la soudure d'un couvercle.

FIG.1

FIG.2

FIG.3

FIG.4